# EUROPEAN PATENT SPECIFICATION

(11) **EP 2 045 646 B1**
(45) Date of publication and mention of the grant of the patent: **09.03.2011**
(21) Application number: 07425592.8
(22) Date of filing: 26.09.2007
(51) Int. Cl.: G01S 3/786, G02B 27/00

(54) **Star sensor with a dual optical power lens to reduce stray light**
Sterndetektor mit einer bifokalen optischen Linse zur Streulichtreduzierung
Ssenseur d'étoiles avec lentille optique bifocale pour réduire la lumière parasite

(43) Date of publication of application: 08.04.2009
(73) Proprietor: SELEX GALILEO S.P.A., 50013 Campi Bisenzio (FI) (IT)
(72) Inventor: Barilli, Marco, 50036 Vaglia Firenze (IT)
(74) Representative: Mannucci, Michele

(56) References cited:
- WO-A-99/28779
- KAWANO HIROYUKI ET AL: "New light-shielding technique for shortening the baffle length of a star sensor" PROCEEDINGS OF THE SPIE - THE INTERNATIONAL SOCIETY FOR OPTICAL ENGINEERING, 2002, pages 62-69, XP002463585 USA

## Description

### Technical field

The present invention relates generally to optical devices, in which it is necessary to reduce the influence of stray light, or unwanted light coming from sources outside the field of view of the device, in order to prevent or contain any degradation or loss of the information received by the optical device. In particular, the present invention relates to improvements to star sensors or so-called attitude sensors. These sensors are generally used in variable numbers on artificial satellites or other devices generally used in space, to control the attitude of the device or vehicle in relation to the night sky.

In the context of the present description and attached claims, the terms light and luminous radiation are used generically to mean any electromagnetic radiation with a wavelength such that it is received and focused by means of a suitable system of transparent lenses at the frequency of the radiation concerned. Thus, the term light is not used exclusively to mean visible light, but also infrared radiation, for instance.

### State of the art

To control and, if necessary, modify the attitude of a vehicle in space, such as a satellite or the like, one or more star sensors are installed on the vehicle to record an image of a portion of the night sky and compare the recorded image with previously-stored star maps in order to verify, control and, if necessary, adjust the attitude of the device or vehicle on which said one or more sensors are installed.

Star sensors generally comprise a lens that forms images of the stars coming within the field of view of said lens on a matrix detector. The stars are identified by means of star maps in order to identify the direction of the optical axis of the lens and the angle of orientation of the detector in relation to the night sky, and thereby to indicate the attitude of the device or vehicle on which the sensor is installed.

A system comprising a star sensor and a device for comparing the image acquired by the sensor with a previously-stored star map is described in US-A-4,944,587.

Kawano et al. "New light shielding technique for shortening the baffle length of a star sensor discloses a star sensor according to the preamble of claim 1.

Baffles or shadows are currently used to screen against parasite light or stray light coming from objects outside the field of view, which would disturb the image and thus reduce or even completely annihilate the system capacity to identify the stars, blinding the detector. These baffles are generally objects of larger dimensions than the optics behind them. The larger the dimensions of such baffles, the more efficient they are, and the narrower the angle at which stray light is rejected. For instance, a baffle capable of screening the light of the sun near the field of view, e.g. 10° from the field of view, would be of prohibitive dimensions.

The term stray light rejection angle is used to mean the minimum angle allowable between the sun (or other source of stray or parasite light) and the optical axis of the sensor without the former interfering with the operation of the latter. Said rejection angle has to be greater than half the angle of the field of view of the sensor.

Examples of star sensors provided with such baffles or shadows are described in JP-A-2003/226300 and JP-A-2002/131078.

In the specific field of interest for the present invention, there is an increasingly perceived need to have sensors available that can efficiently prevent stray light from affecting the detector.

Problems similar to those occurring in the design of star sensors can also be experienced in the design of other optical devices comprising an objective, in which it is desirable, advisable or necessary to eliminate or contain the effect of luminous radiation (be it within the range of visible wavelength or at invisible wavelengths, e.g. in the field of infrared light) coming from sources outside the field of view of the device optics. As an example, without excluding others, comparable problems crop up in all types of optical instrument, such as objectives operating within the infrared band, seekers, camera lenses operating in visible bands and so on.

### Summary of the invention

According to a first aspect, the invention involves a star sensor according to claim 1, comprising an objective including a plurality of single lenses placed in sequence along an optical path between the inlet and outlet of said objective, wherein one of the lenses is an optical element having a dual optical power for reducing the stray light, i.e. the unwanted light coming from sources outside the field of view of the optical device.

The optical device comprises a detector located at the outlet of the objective and on which the light or luminous radiation arrives. The optical lens having a dual optical power reduces or eliminates any stray light or unwanted light that could otherwise reach the detector and consequently interfere with the information received by the detector. In one embodiment, the optical device is a star sensor.

In practical terms, said dual optical power lens is advantageously the last lens in the objective, i.e. the one nearest to the detector. According to a preferred embodiment, the dual optical power lens is a lens that has a negative dioptre, i.e. a concave portion, to reduce the field curvature. In a practical embodiment, the lens has two sides, each with concave spherical surfaces having different dimensions in the radial or diametric direction, i.e. in a direction orthogonal to the optical axis of the lens. More in particular, the first side of the lens facing towards the inlet of the optical system has a portion of concave spherical surface of smaller diametric dimensions than the corresponding portion of concave spherical surface on the second side facing towards the detector. A ring-shaped portion of substantially flat surface surrounds the portion of concave spherical surface on the first side. The lens thus has a ring-shaped outer portion with a lesser focusing power than its central portion.

According to a different aspect, the invention relates to a dual optical power lens for a star sensor, or more in general for any other optical device in which it is necessary or useful to reduce the effect of unwanted luminous radiation, as in a camera or the like, comprising: a first side with a first central portion of concave spherical surface and a second portion of flat surface surrounding said first portion of concave spherical surface; and a second side with a third portion of concave spherical surface.

Further advantageous characteristics of the lens and of the optical system according to the invention are set forth in the attached claims and described below with reference to a practical embodiment of the invention.

### Brief description of the drawings

The invention will be better understood by ensuing the following description and the attached drawings, which show a non-limiting practical embodiment of the invention. More in particular:
Figs. 1A and 1B show diagrams of a star sensor incorporating the invention and of an enlargement of the objective and detector in a longitudinal cross-section along the optical axis;
Figs. 2A and 2B show diagrams similar to those of Figs. 1A and 1B, with a luminous incoming beam at an angle narrower than the angle at which stray light is rejected;
Figs. 3A and 3B show diagrams similar to those of Figs. 2A and 2B, but in which the incoming radiation has an angle greater than the angle at which stray light is rejected;
Figs. 4A and 4B show how an optical system with and without the dual optical power lens according to the invention behaves in response to a beam of stray light entering the lens; and
Fig. 5 shows a cross-sectional view of the dual optical power lens according to the invention.

### Detailed description of an embodiment of the invention

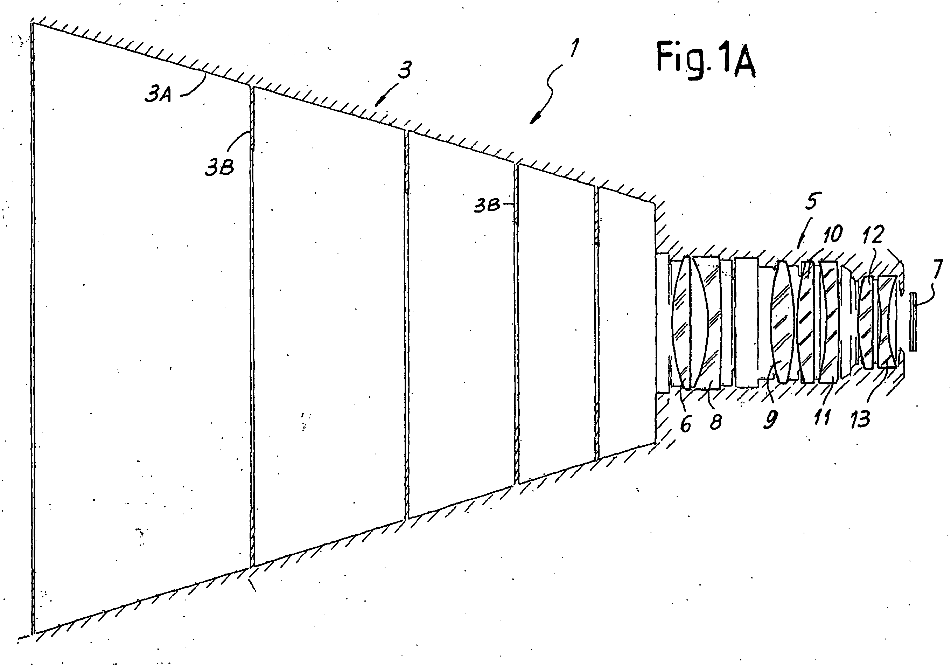

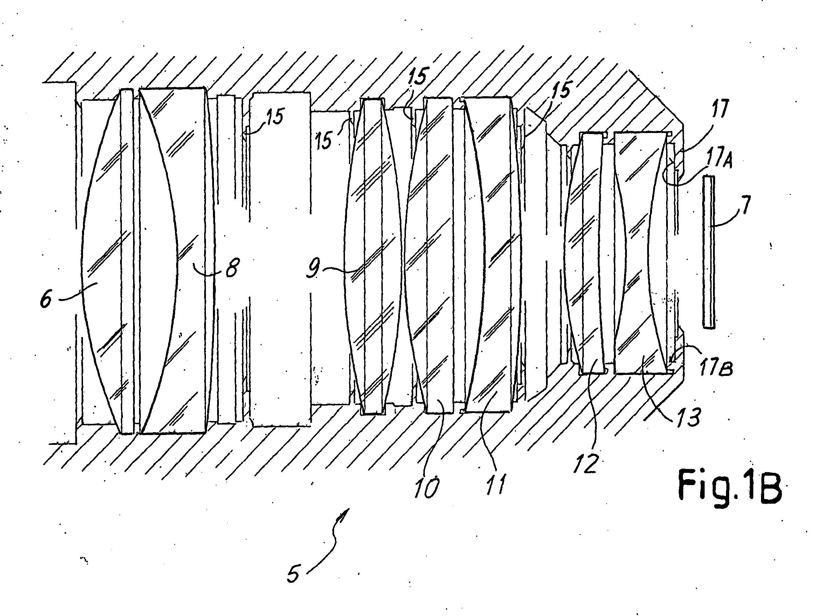

Referring initially to Figs. 1A and 1B, the star sensor incorporating the present invention, globally indicated by the numeral 1, has a baffle or shadow 3 positioned in front of an objective globally indicated by the numeral 5. Behind the objective 5, i.e. at the end opposite the baffle 3, there is a sensitive element or detector 7. In some embodiments, the baffle 3 comprises a conical surface 3A, containing ring-shaped diaphragms 3B of dimensions progressively declining from the inlet towards the outlet of the baffle 3. The purpose of these diaphragms is clearly evident from the attached drawings and known to those skilled in the art. In general terms, the sensor hitherto described is known.

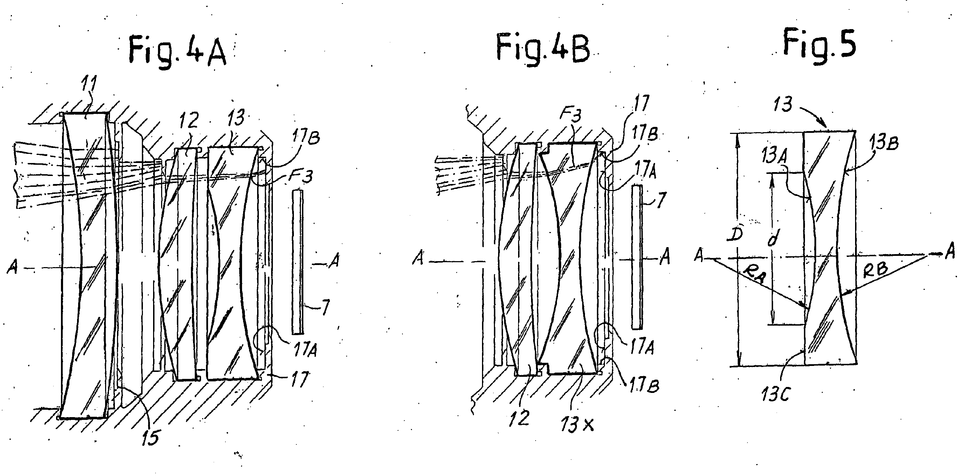

In the embodiment described, the objective 5 comprises a plurality of single optical elements indicated by the numerals 6, 8, 9, 10, 11, 12 and 13. The optical element of particular interest for the purposes of this description is the last lens 13, shown separately in the axial cross-section of Fig. 5 and described in greater detail below. The numeral 15 indicate intermediate diaphragms inserted between adjacent lenses or optical elements in the objective 5, all arranged in a known manner.

Characteristically, according to the invention, the last lens 13 is a lens with a dual optical power, i.e. a bifocal lens that serves the dual purpose of reducing the field curvature of the optical system and confining the unwanted radiation, i.e. the light travelling from outside at an angle of incidence beyond the stray light rejection angle, towards a field diaphragm 17 situated between the optical element 13 and the detector 7, so that said radiation cannot reach the detector, i.e. so that it remains invisible to the detector 7.

As shown in more detail in Fig. 5, the lens 13 has a concave spherical surface 13A with a smaller diametric dimension d, than the overall diameter of the lens, and an opposite concave spherical surface 13B with a diametric dimension D, corresponding to the diametric dimension of the whole lens 13. The area coming between the diameter d and the diameter D on the front surface of the lens 13 is defined by a ring-shaped flat surface 13C. Thus, the optical element 13 is basically a bifocal element in which the central area of diameter d has a different focusing power from the ring-shaped area of internal diameter d and external diameter D.

The radius of curvature of the spherical surfaces 13A and 13B may differ and, in some embodiments, the radius of curvature RA of the spherical surface 13A is smaller than the radius of curvature RB of the spherical surface 13B.

The above-described lens is suitably coated with an anti-reflection treatment over its entire surface In fact, the flat ring of the dioptre can be "optically finished" and undergo surface treatments exactly like the adjacent concave area.

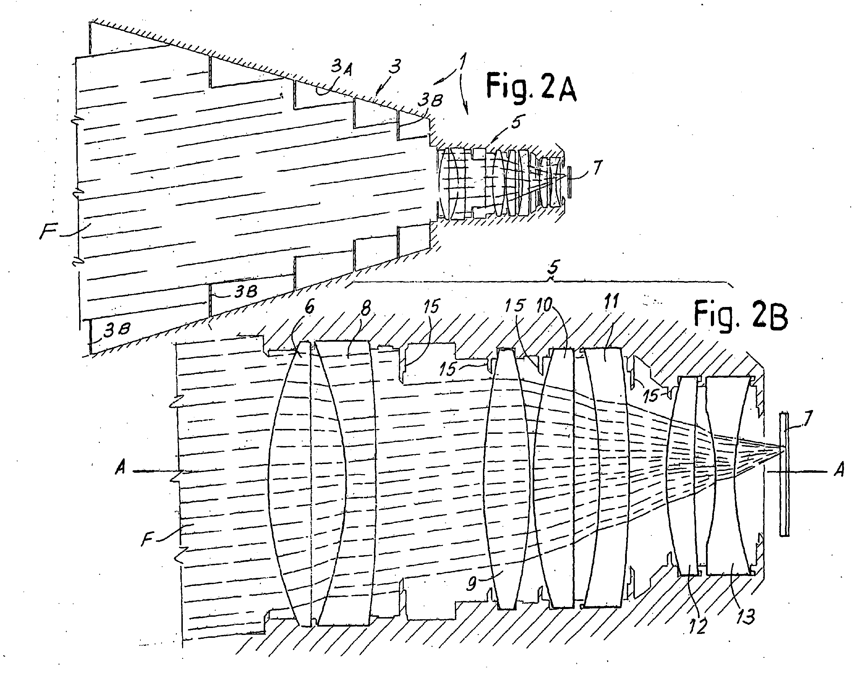

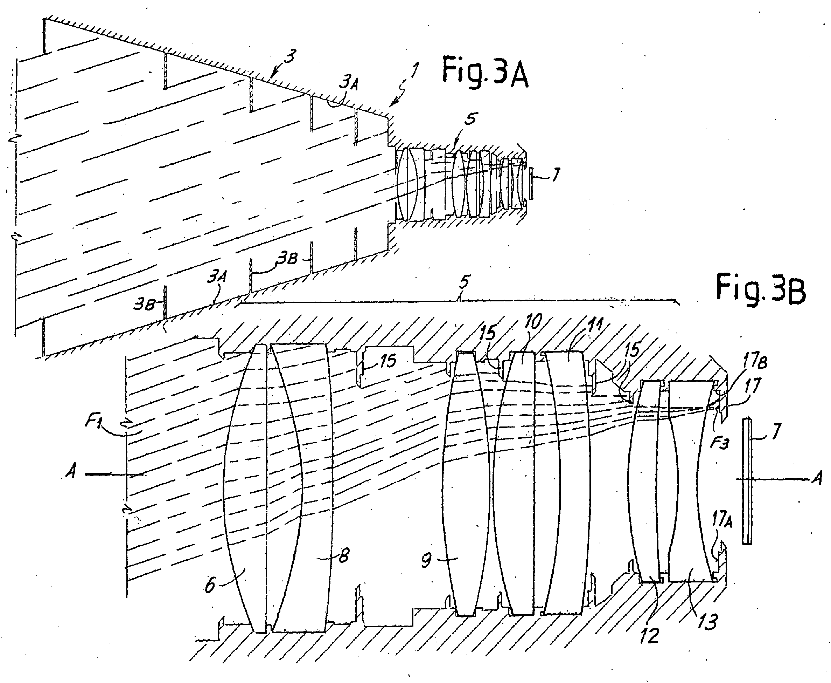

The result is a bifocal lens, or dual optical power lens, 13 as shown clearly in the diagrams in Figs. 2A, 2B and 3A, 3B.

More in particular, Figs. 2A and 2B show a beam F of luminous radiation entering the optical device at an angle narrower than the stray light rejection angle. This beam consequently reaches the detector 7 through the lenses 6-13 of the objective 5, passing through a spherical dioptre defined by the spherical surfaces 13A and 13B, which have a field curvature flattening effect, i.e. a reduction of the curvature of the image coming within the useful portions of the field of view of the objective.

Conversely, Figs. 3A, 3B show a beam F1 of incoming luminous radiation at an angle - with respect to the optical axis A-A of the sensor 1 - that is greater than the stray light rejection angle. This radiation is partially intercepted by the diaphragms 15 inside the objective 5 and the remainder reaches the flat-concave area of the lens 13, or the immediate vicinity of the area of transition between the flat surface 13C and the concave spherical surface 13A. As a result, the beam is deflected as shown in F3 onto the field diaphragm 17, inserted between the bifocal lens 13 and the detector 7.

More in particular, as shown in Fig. 3B, the luminous beam F1 reaching the front surface of the lens 13 is divided into two beams, or rays, in the area of transition between the spherical surface 13A and the flat surface 13C, thereby demonstrating that the lens or optical element 13 has a dual focusing power. The lens 13 consequently behaves differently depending on the field angle at which the light enters the sensor 1.

In essence, when it passes through the optical element 13 the stray light that must not be allowed to reach the detector 7 is "redirected" into an area not directly visible to the detector 7 inside the sensor 1. This functional feature is preserved over a wide range of directions outside the field of view of the sensor, making the objective 5 particularly efficient in suppressing stray light, thanks to the use of the optical element 13 that is inexpensive and must in any case be included in the objective 5 in order for the optical system to function properly, because it also has the effect of flattening the field curvature of the useful radiation.

The effect of the lens 13 in terms of reducing stray light or unwanted light is easier to understand with reference to the diagrams in Figs. 4A and 4B. Like Fig. 3A, Fig. 4A shows the effect of the dual optical power lens 13 on a beam of stray light, which must be deflected so that it cannot reach the detector 7. In this case, the angle of inclination of the incoming beam is such that it reaches the ring-shaped flat portion of the front surface of the lens 13. The light beam is deflected by the lens 13 (or, to be more precise, by the ring-shaped portion of said lens) so that it reaches the front surface 17A of the field diaphragm 17 in a direction almost orthogonal to said surface, which is blackened or anodised or otherwise surface-treated to make it strongly absorbent. It consequently absorbs a large proportion (around 95-99%) of the light impinging on it at a nearly zero angle of incidence. Other portions of the mechanical structure of the lens (such as the cylindrical lateral surface 17B of the diaphragm 17) may be unsuitable for such surface treatment, such that a beam of stray light reaching their surfaces is at least partially diffused or reflected towards the detector 7, and/or are oriented such that a possible stray light beam reaches them at such an angle that the absorbent effect of any surface treatment is limited and a considerable proportion of the incident light is scattered and/or reflected towards the detector 7.

Fig. 4B shows an embodiment of the same objective, but with a conventional lens 13X having two concave surfaces instead of the bifocal lens 13. It can be seen that, in the absence of the bifocal lens 13, the beam of stray light F3 reaches the surface 17B, which cannot be surface treated to make it absorbent. Moreover, the angle of incidence is such that any absorbent treatment applied to said surface 17B would be scarcely effective anyway. As a consequence, the beam F3 can be at least partially diffused or reflected towards the detector 7, whereas this circumstance would be avoided using the bifocal or dual optical power lens 13 according to the invention (Fig. 4A).

Clearly, the drawings simply show an example, given here as a practical demonstration of the invention, which may vary in shape and layout without departing from the scope of the invention. Any reference number in the attached claims is merely to facilitate the understanding of the claims with reference to the description and drawings, and shall not be construed as limiting the scope protection defined by the claims.

## Claims

1. A star sensor device comprising: an objective (5) with a plurality of lenses (6, 8, 9, 11, 13) arranged in sequence along an optical path between an inlet and an outlet of said objective; a detector (7) situated opposite the outlet of said objective (5); a field diaphragm (17); **characterised in that**: one (13) of said lenses is a bifocal lens with a dual optical power, a central portion of said lens having a higher focusing power than a ring-shaped portion surrounding said central area; said field diaphragm (17) is inserted behind said bifocal lens (13); and said bifocal lens is sized so that any radiation outside the field of view of the optical device and having an angle of incidence greater than a stray light rejection angle is deflected from the ring-shaped portion of the bifocal lens towards said field diaphragm (17), confining said radiation to within the area of said field diaphragm (17), such that the stray light that must not be allowed to reach the detector (7) is redirected by said bifocal lens (13) into an area not directly visible to the detector (7).

2. Device according to claim 1, **characterized in that** said bifocal lens (13) is designed such that the incoming light having an angle of incidence greater than the stray light rejection angle and reaching said bifocal lens (13) is deflected by the ring-shaped portion of said bifocal lens so that said light reaches a front surface (17A) of said field diaphragm (17) in a direction almost orthogonal to said surface, said surface being surface-treated to make it strongly absorbent.

3. Device according to claim 1 or 2, **characterised in that** said bifocal lens (13) comprises a negative spherical dioptre with a flat rim (13C) on one side of the lens.

4. Device according to claim 1 or 2 or 3, **characterised in that** said bifocal lens comprises a central portion defined by two opposite concave spherical surfaces (13A, 13B) and a ring-shaped portion surrounding said central portion, defined by a flat surface (13C) on one side and a concave spherical surface (13B) on the other, the flat surface facing towards the objective inlet.

5. Device according to one or more of the preceding claims, **characterised in that** said bifocal lens (13) is the last lens of the objective (5).

6. Device according to one or more of the previous claims, **characterised in that** said bifocal lens (13) has: a first side (13A, 13C) facing towards the inlet of the objective (5), the surface of which comprises a central concave spherical portion (13A) surrounded by a flat portion (13C) around the perimeter of said spherical surface; and a second side with a concave spherical surface (13B) facing towards the outlet of the objective.

7. Device according to claim 6, **characterised in that** the concave spherical surface (13B) of the second side of said bifocal lens (13) has a diametric dimension greater than the diametric dimension of the central concave spherical portion (13A) on the first side.

8. Device according to claim 6 or 7, **characterised in that** said flat portion (13C) of surface has a radial dimension equating to the radial dimension of the concave spherical surface (13B) on the second side of the lens (13).

9. Device according to one or more of the claims 6 to 8, **characterised in that** said spherical portion (13A) of surface on the first side of the bifocal lens (13), facing towards the inlet of the objective (5), has a smaller radius of curvature (RA) than the spherical surface (13B) on the second side of said bifocal lens (13), facing towards the outlet of the objective (5).

10. Device according to one or more of the previous claims, **characterised in that** said bifocal lens (13) is the lens used for field curvature correction.

11. Device according to one or more of the previous claims, **characterised in that** it comprises a front baffle (3), situated in front of the objective (5).

12. Device according to one or more of the previous claims, **characterised in that** the surfaces (13A, 13B, 13C) of said bifocal lens (13), through which the radiation passes, have an anti-reflection treatment and are optically finished.

13. Device according to claim 13, **characterised in that** said field diaphragm (17) is situated between said objective (5) and said detector (7).

14. Device according to one or more of the previous claims, **characterised in that** it is a star sensor.

## Patentansprüche

1. Gestirnsensorvorrichtung, umfassend: ein Objektiv (5) mit mehreren Linsen (6, 8, 9, 11, 13), die nacheinander entlang eines optischen Pfads zwischen einem Objektiveintritt und einem Objektivaustritt angeordnet sind; einen Detektor (7), der gegenüber dem Austritt des Objektivs (5) untergebracht ist; eine Feldblende (17); **dadurch gekennzeichnet, dass**
eine (13) der Linsen eine bifokale Linse mit einem doppelten Brechwert ist, wobei eine zentraler Bereich der Linse eine größere Fokussierleistung aufweist als ein ringförmiger Bereich, welcher den zentralen Bereich umgibt; dass die Feldblende (17) hinter der bifokalen Linse (13) eingesetzt ist; und dass die bifokale Linse derart dimensioniert ist, dass jede Strahlung außerhalb des Sichtfelds der optischen Vorrichtung und mit einem Einfallswinkel, der größer ist als ein Streulichtsperrwinkel, vom ringförmigen Bereich der bifokalen Linse zur Feldblende (17) abgelenkt wird, so dass das Streulicht, das den Detektor (7) nicht erreichen soll, durch die bifokale Linse (13) umgeleitet wird in einen Bereich, der für den Detektor (7) nicht unmittelbar sichtbar ist.

2. Vorrichtung nach Anspruch 1, **dadurch gekennzeichnet, dass** die bifokale Linse (13) derart ausgebildet ist, dass eintreffendes Licht, das einen Einfallswinkel aufweist, der größer ist als der Streulichtsperrwinkel, und das die bifokale Linse (13) erreicht, durch den ringförmigen Bereich der bifokalen Linse abgelenkt wird, so dass das Licht eine vordere Fläche (17A) der Feldblende (17) in einer im Wesentlichen orthogonalen Richtung zur Fläche erreicht, wobei die Fläche oberflächenbehandelt ist, um sie stark absorbierend zu machen.

3. Vorrichtung nach Anspruch 1 oder 2, **dadurch gekennzeichnet, dass** die bifokale Linse (13) ein negatives sphärisches Diopter mit einem ebenen Rand (13C) auf einer Seite der Linse umfasst.

4. Vorrichtung nach Anspruch 1 oder 2 oder 3, **dadurch gekennzeichnet, dass** die bifokale Linse einen zentralen Bereich umfasst, der durch zwei gegenüber konkave sphärische Flächen (13A, 13B) definiert ist, und einen ringförmigen Bereich, der den zentralen Bereich umgibt und der durch eine ebene Fläche (13C) auf der einen Seite und eine konkave sphärische Fläche (13B) auf der anderen Seite definiert ist, wobei die ebene Fläche zum Objektiveintritfi gerichtet ist.

5. Vorrichtung nach einem oder mehreren der vorhergehenden Ansprüche, **dadurch gekennzeichnet, dass** die bifokale Linse (13) die letzte Linse des Objektivs (5) ist.

6. Vorrichtung nach einem oder mehreren der vorhergehenden Ansprüche, **dadurch gekennzeichnet, dass** die bifokale Linse (13) aufweist: eine erste Seite (13A, 13C), die zum Eintritt des Objektivs (5) gerichtet ist, wobei deren Fläche einen zentralen, konkaven sphärischen Abschnitt (13A) umfasst, der von einem ebenen Abschnitt (13C) um den Umfang der sphärischen Fläche herum umgeben ist; und eine zweite Selte mit einer konkaven sphärischen Fläche (13B), die zum Austritt des Objektivs gerichtet ist.

7. Vorrichtung nach Anspruch 6, **dadurch gekennzeichnet, dass** die konkave sphärische Fläche (13B) der zweiten Seite der bifokalen Linse (13) eine Durchmesserdimension aufweist, die größer ist als die Durchmesserdimension des zentralen, konkaven sphärischen Bereichs (13A) auf der ersten Seite.

8. Vorrichtung nach Anspruch 6 oder 7, **dadurch gekennzeichnet, dass** der ebene Bereich (13C) der Fläche eine radiale Dimension aufweist, die gleich groß ist wie die radiale Dimension der konkaven sphärischen Fläche (13B) auf der zweiten Seite der Linse (13).

9. Vorrichtung nach einem oder mehreren der Ansprüche 6 bis 8, **dadurch gekennzeichnet, dass** der sphärische Bereich (13A) der Fläche auf der ersten Seite der bifokalen Linse (13), welcher zum Eintritt des Objektivs (5) gerichtet ist, einen kleineren Krümmungsradius (RA) aufweist als die zum Austritt des Objektivs gerichtete, sphärische Fläche (13B) auf der zweiten Seite der bifokalen Linse (13).

10. Vorrichtung nach einem oder mehreren der vorhergehenden Ansprüche, **dadurch gekennzeichnet, dass** die bifokale Linse (13) die zur Feldkrümmungskorrektur verwendete Linse ist.

11. Vorrichtung nach einem oder mehreren der vorhergehenden Ansprüche, **dadurch gekennzeichnet, dass** sie eine vordere Leitwand (3) umfasst, die vor dem Objektiv (5) gelegen ist.

12. Vorrichtung nach einem oder mehreren der vorhergehenden Ansprüche, **dadurch gekennzeichnet, dass** die Flächen (13A, 13B, 13C) der bifokalen Linse (13), durch welche die Strahlung hindurch tritt, antireflexionsbehandelt und optisch veredelt sind.

13. Vorrichtung nach Anspruch 12, **dadurch gekennzeichnet, dass** die Feldblende (17) zwischen dem Objektiv (5) und dem Detektor (7) gelegen ist.

14. Vorrichtung nach einem oder mehreren der vorhergehenden Ansprüche, **dadurch gekennzeichnet, dass** es ein Gestirnsensor ist.

## Revendications

1. Dispositif capteur d'étoiles comprenant : un objectif (5) avec une pluralité de lentilles (6, 8, 9, 11, 13) agencées en séquence le long d'un chemin optique entre une entrée et une sortie dudit objectif ; un détecteur (7) situé à l'opposé de la sortie dudit objectif (5) ; un diaphragme de champ (17) ; **caractérisé en ce que** : l'une (13) desdites lentilles est une lentille bifocale avec une double puissance optique, une partie centrale de ladite lentille ayant une puissance de focalisation supérieure à celle d'une partie en forme d'anneau entourant ladite zone centrale ; ledit diaphragme de champ (17) est inséré derrière ladite lentille bifocale (13) ; et ladite lentille bifocale est dimensionnée de sorte que tout rayonnement à l'extérieur du champ de vision du dispositif optique et ayant un angle d'incidence supérieur à un angle de rejet de lumière parasite soit dévié de la partie en forme d'anneau de la lentille bifocale vers ledit diaphragme de champ (17), en confinant ledit rayonnement à l'intérieur de la zone dudit diaphragme de champ (17), de sorte que la lumière parasite qui ne doit pas pouvoir atteindre le détecteur (7) soit redirigée par ladite lentille bifocale (13) dans une zone pas directement visible par le détecteur (7).

2. Dispositif selon la revendication 1, **caractérisé en ce que** ladite lentille bifocale (13) est conçue de sorte que la lumière entrante ayant un angle d'incidence supérieur à l'angle de rejet de lumière parasite et atteignant ladite lentille bifocale (13) soit déviée par la partie en forme d'anneau de ladite lentille bifocale afin que ladite lumière atteigne une surface avant (17A) dudit diaphragme de champ (17) dans une direction presque orthogonale à ladite surface, ladite surface ayant subi un traitement de surface pour la rendre fortement absorbante.

3. Dispositif selon la revendication 1 ou 2, **caractérisé en ce que** ladite lentille bifocale (13) comprend un dioptre sphérique négatif avec un rebord plat (13C) sur un côté de la lentille.

4. Dispositif selon la revendication 1 ou 2 ou 3, **caractérisé en ce que** ladite lentille bifocale comprend une partie centrale définie par deux surfaces sphériques concaves opposées (13A, 13B) et une partie en forme d'anneau entourant ladite partie centrale, définie par une surface plate (13C) d'un côté et une surface sphérique concave (13B) de l'autre, la surface plate faisant face vers l'entrée de l'objectif.

5. Dispositif selon une ou plusieurs des revendications précédentes, **caractérisé en ce que** ladite lentille bifocale (13) est la dernière lentille de l'objectif (5).

6. Dispositif selon une ou plusieurs des revendications précédentes, **caractérisé en ce que** ladite lentille bifocale (13) comporte : un premier côté (13A, 13C) faisant face vers l'entrée de l'objectif (5), dont la surface comprend une partie sphérique concave centrale (13A) entourée d'une partie plate (13C) autour du périmètre de ladite surface sphérique ; et un deuxième côté avec une surface sphérique concave (13B) faisant face vers la sortie de l'objectif.

7. Dispositif selon la revendication 6, **caractérisé en ce que** la surface sphérique concave (13B) du deuxième côté de ladite lentille bifocale (13) a une dimension diamétrale supérieure à la dimension diamétrale de la partie sphérique concave centrale (13A) du premier côté.

8. Dispositif selon la revendication 6 ou 7, **caractérisé en ce que** ladite partie plate (13C) de la surface a une dimension radiale égale à la dimension radiale de la surface sphérique concave (13B) du deuxième côté de la lentille (13).

9. Dispositif selon une ou plusieurs des revendications 6 à 8, **caractérisé en ce que** ladite partie sphérique (13A) de la surface sur le premier côté de la lentille bifocale (13), faisant face vers l'entrée de l'objectif (5), a un rayon de courbure (RA) inférieur à celui de la surface sphérique (13B) sur le deuxième côté de ladite lentille bifocale (13), faisant face vers la sortie de l'objectif (5).

10. Dispositif selon une ou plusieurs des revendications précédentes, **caractérisé en ce que** ladite lentille bifocale (13) est la lentille utilisée pour la correction de courbure de champ.

11. Dispositif selon une ou plusieurs des revendications précédentes, **caractérisé en ce qu'**il comprend une chicane avant (3) située devant l'objectif (5) .

12. Dispositif selon une ou plusieurs des revendications précédentes, **caractérisé en ce que** les surfaces (13A, 13B, 13C) de ladite lentille bifocale (13) traversées par le rayonnement ont un traitement antireflet et une finition optique.

13. Dispositif selon la revendication 13, **caractérisé en ce que** ledit diaphragme de champ (17) est situé entre ledit objectif (5) et ledit détecteur (7) .

14. Dispositif selon une ou plusieurs des revendications précédentes, **caractérisé en ce qu'**il s'agit d'un capteur d'étoiles.
